Europäisches Patentamt

European Patent Office

Office européen des brevets

(11) Publication number: **0 491 371 A2**

# EUROPEAN PATENT APPLICATION

(21) Application number: **91121645.5**

(22) Date of filing: **17.12.91**

(51) Int. Cl.5: **G01N 21/17**

(30) Priority: **18.12.90 IT 6801990**

(43) Date of publication of application:
**24.06.92 Bulletin 92/26**

(84) Designated Contracting States:
**DE FR GB IT NL SE**

(71) Applicant: **CSELT Centro Studi e Laboratori Telecomunicazioni S.p.A.**
**Via Guglielmo Reiss Romoli, 274**
**I-10148 Turin(IT)**

(72) Inventor: **Cacciatore, Carmelo**
**Via Domodossola, 26**
**Torino(IT)**
Inventor: **Campi, Domenico**
**C.so Traiano, 7**
**Torino(IT)**

(74) Representative: **Riederer Freiherr von Paar zu Schönau, Anton et al**
**Lederer, Keller & Riederer, Freyung 615,**
**Postfach 26 64**
**W-8300 Landshut(DE)**

(54) Improvements to systems for optical characterisation of materials.

(57) A method and an apparatus for optical characterisation of a semiconductor material are disclosed, wherein the variations in material transmittance induced by electrical field variations are exported. Said electrical field variations are obtained without applying external electrodes to the sample used for the characterisation.

The present invention concerns material characterisation systems and more particularly it refers to a method of and apparatus for characterising semiconductor materials from the optical stand-point.

Analysis techniques exploiting variations of light absorption by the material, induced by variations of an electrical field applied to the material itself, are widely used to this aim. Information about absorption provides further information on the structure of the material or of a body made of the material, etc. Said techniques proved particularly suited e.g. for investigating quaternary alloys In-GaAsP, which are of great interest for fabricating components for use in optical communications.

Generally, when employing said techniques, a beam of monochromatic light at suitable wavelength is sent on to a sample of material and the relative variations of the transmitted beam intensity are analysed in function of the wavelength and the applied electrical field variations. The modulated electrical field causing transmittance and hence absorption variations is applied by external electrodes. Examples of measurements based on these techniques are described in the papers "Electroabsorption in GaInAsP" by R. Kingston, Applied Physics Letters, Vol. 34, No. 11, 1st June, 1979, and "Absorption and electroabsorption spectra of an $In_{1-}$ Ga $P_{1-}$ As/InP double heterostructure" by K. Satzke, G. Weiser, R. Höger and W.Thulke, Journal of Applied Physics, Vol. 63, No. 11, 1st June, 1988. Said known methods present some disadvantages due to the use of electrodes for applying the modulated electrical field, since their fabrication requires an additional working step, what lengthens the operation time and increases measurement costs.

The invention aims to supply a method and a device allowing the required measurements to be effected without need of additional working steps.

The present invention provides a method for optical characterisation of a material, wherein a first light beam is sent onto the surface of a sample of the material under test and the relative variations of the intensity of the transmitted beam, due to variations of the sample transmittance induced by electrical field variations in the sample in the incidence zone of said first light beam, are measured as the wavelength of the first beam varies, and wherein such variations are generated by a second amplitude-modulated monochromatic beam sent to the incidence point of the first beam and having a wavelength allowing its absorption by the material under test.

The invention concerns also an apparatus for performing the method, comprising a source of a first monochromatic beam sending the first beam onto the surface of a sample of the material to be analysed, means for generating a variable electrical field at the beam incidence zone in order to modulate the sample transmittance, and a measurement and computing system to determine the relative transmittance variations as the wavelength of the first monochromatic beam varies, wherein the means for generating the variable electrical field comprises a source of a second monochromatic beam, with such a wavelength as to ensure its absorption by the material under test, which sends such a second beam onto the sample surface, at the incidence point of the first beam, and means for periodically intercepting the second beam so as to obtain its amplitude modulation.

An example of an apparatus according to the invention is schematically represented in the annexed drawing, wherein the light radiation path is indicated by thin lines, whilst the electrical signal path is indicated by thick lines.

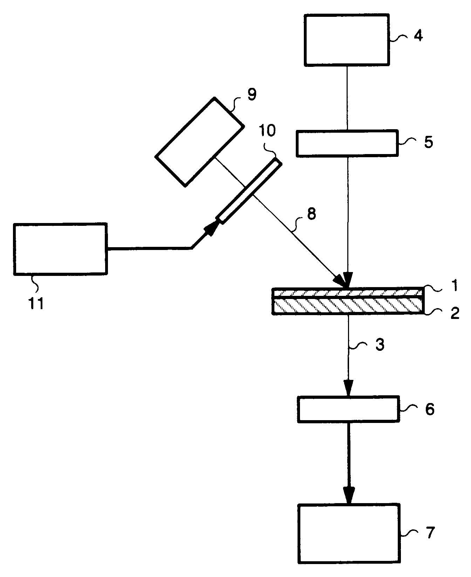

In the drawing, a sample 1 of a transparent semiconductor material, possibly carried by a support 2, is illuminated by a monochromatic light beam 3 emitted by a source 4 associated with a monochromator 5 which allows different wavelengths to be selected and sent towards the sample. The source will be preferably chosen so that also the support is transparent to the emitted wavelengths; otherwise, the support ought to be partially removed to allow passage of beam 3. The condition of transparence is however satisfied by all semiconductor materials grown on InP, which are materials of particular interest for this type of characterisation.

The beam, after traversing sample 1 and support 2, is collected by a photodetector 6 connected to a suitable measurement and data processing system 7 (e.g. a lock-in amplifier and a computer associated with a display), for measuring variations $\Delta I$ of the beam intensity with wavelength, for deriving from these variations the variations of the absorption coefficient $\Delta\alpha$ of the material due to electrical field variations in the incidence zone of beam 3 and for supplying, starting from the measured values, information relevant to the material structure. Electrical field variations are obtained by means of a modulated light beam 8, emitted by a second monochromatic light source 9, e.g. a gas laser with suitable wavelength, associated with a device 10, e.g. a diaphragm, which periodically intercepts the beam outgoing from laser 9. Reference 11 schematises the device generating the control signal for periodically opening/closing the diaphragm, e.g. a square wave generator.

This second beam creates electron-hole pairs near the material surface, which modify the band structure at the sample surface so that such structure periodically varies owing to the beam modulation; these band modifications form the electrical field variations which in turn cause the transmittance variations required by the measurement. In order to actually generate these periodical variations of the band structure, the seond beam must be absorbed by sample 1, and then it must have such a wavelength that its energy exceeds the amplitude of the band gap in the material under test. E.g. in case of a sample of an alloy InGaAsP grown on InP, source 9 can be a HeNe laser.

By use of an optical beam for generating electrical field variations additional working steps for fabricating the electrodes or for other surface preparations are no longer required, so that the measurement is quicker and hence cheaper.

**Claims**

1. A method for optical characterisation of semiconductor materials, wherein a first light beam (3) is sent on to the surface of a sample (1) of a material under test and the relative variations of the transmitted beam intensity, due to transmittivity variations of the sample induced by electrical field variations in the sample in the zone of incidence of the light beam, are measured as the wavelength of the first beam varies, characterised in that such variations are generated by a second amplitude-modulated monochromatic optical beam (8), which is sent to the incidence point of the first beam (3) and has a wavelength allowing its absorption by the material under test.

2. Apparatus for implementing the method as claimed in claim 1, comprising a source (4) of a first monochromatic beam (3) sending this first beam (3) onto the surface of a sample (1) of a material to be analysed, means (8, 9, 10, 11) for generating a variable electrical field in the incidence zone of the first beam in order to modulate the sample transmittance, and a detection and measurement system (6, 7) determining the relative variations of transmittance as the wavelength of the first beam varies, characterised in that the means (8, 9, 10, 11) for generating the variable electrical field comprises a source (9) of a second monochromatic beam (8), with such a wavelength that said second beam is absorbed by the material under test, which source sends said second beam (8) onto the sample surface (1) at the incidence point of the first beam (4), and means (10, 11) placed between the second source (9) and the sample (1) to amplitude-modulate the second beam (8).